# EUROPEAN PATENT APPLICATION

(11) **EP 2 161 915 A1**
(43) Date of publication of application: **10.03.2010**
(21) Application number: 08764306.0
(22) Date of filing: 16.05.2008
(51) Int. Cl.: H04N 1/387, B41J 29/40, H04N 5/76

(54) **IMAGE PRINT SYSTEM AND IMAGE PRINT DEVICE**

(30) Priority: 18.05.2007 JP 2007132693
(71) Applicant: Dai Nippon Printing Co., Ltd., Shinjuku-ku Tokyo 162-8001 (JP)
(72) Inventor: MATSUO, Taichi, Tokyo 162-8001 (JP)
(74) Representative: Strehl Schübel-Hopf & Partner
(86) International application number: PCT/JP2008/059017
(87) International publication number: WO 2008/143165

(57) **Abstract**

When a recording medium (5) is inserted or taken out, an LED of an insert opening is made to blink so that a user will not make an error or forget to take the medium. Moreover, prior to an image data read process, a storage device having a storage capacity not smaller than a predetermine storage capacity, is detected and a service is terminated. This avoids a long-time read process. Furthermore, in a date acquisition process, if the image data has no imaging date/time information, file creation date/time information or file update date/time information, associated with the image data is acquired and surely printed on a print object (7).

## Description

### TECHNICAL FIELD

This invention relates to an image print system and so on for printing desired image data held by recording medium and so on.

### BACKGROUND ART

Currently, an image print system which reads an image data from a recording medium and so on held by a user and prints a desired image data is invented. These kinds of image print systems are described in the patent document 1 and the patent document 2.
In the patent document 1, it reads an image data from a recording medium and so on and stores it in an image database. Next, it reads an image data corresponding to each client in a client database from the image database and reads a frame data from a frame database. Then, it synthesizes the image data and the frame data and prints. This will allow a user to print easily a desired image data from a recording medium and so on held by a user.
Moreover, in the patent document 2, it synthesizes characters of the imaging date, when it prints an image of the image file supporting Exif (Registered trademark) (Exchangeable Image File Format) which is standardized format containing imaging date information and so on. In addition, hereinafter, information of a digital image data standardized by a predetermined format such as Exif (Registered trademark) is described as standardized information.

Patent Document 1: Japanese Patent Application Laid-Open (kokai) No. 2005-123936
Patent Document 2: Japanese Patent Application Laid-Open (kokai) No. 2004-317594

### DISCLOSURE OF THE INVENTION

### PROBLEMS TO BE SOLVED BY THE INVENTION

However, recently, the productization of these kinds of image print systems gets active, and improvement of user's satisfaction and differentiation from other companies are demanded. Especially, when it prints an image of an image file (BMP file, GIF file and so on) not supporting Exif (Registered trademark), there was a problem that it can not acquire imaging date information and can not synthesize characters of imaging date. Moreover, even though it prints an image of an image file (JPEG file and so on) supporting Exif (Registered trademark), imaging date information and so on may have been deleted and there was a problem that it can not acquire imaging date information and can not synthesize characters of imaging date. A case that the imaging date information has been deleted is a case that the imaging date information is not setup in the information of Exif (Registered trademark) from the start or a case even though the imaging date information is setup in the information of Exif (Registered trademark), when the data is processed on PC, the data is saved without leaving imaging date information or the data is saved in the different file format.

The present invention was achieved in view of the above-mentioned problems. An object of the present invention is to provide an image print system which provides service safely and certainly and improves user's satisfaction. Especially, when a user asks to assign a date on a print object, the object is to provide an image print system which assigns a date certainly.

### MEANS FOR SOLVING THE PROBLEMS

In order to achieve foregoing objects, a first invention is an image print system wherein an image print device prints desired image data held by recording medium, and said image print device comprising: a portion acquiring imaging date/time information of standardized information associated with said image data; and a portion acquiring file creation date/time information or file update date/time information associated with said image data from an administrative area of a storage part of said image print device or an administrative area of said recording medium, when said imaging date/time information was blank. The standardized information is information of a digital image data standardized by Exif (Registered trademark) and so on. That the imaging date/time information is blank not only means what is called null value but also contains all data such as default value different from an original imaging date/time. Moreover, the case that the imaging date/time information is blank also contains the case targeting an image data associated with an image file not supporting standardized information (= an image data not storing imaging date/time information) and not being able to acquire the imaging date/time information.

Further, it is preferable that said image print device comprises: a portion holding year/month/date of said imaging date/time information as date information when said imaging date/time information was not blank, or holding year/month/date of said file creation date/time information or said file update date/time information as said date information when said imaging date/time information was blank; and a portion assigning said held date information to said image data and printing.

A second invention is an image print device printing desired image data held by a recording medium comprising: a portion acquiring imaging date/time information of standardized information associated with said image data; and a portion acquiring file creation date/time information or file update date/time information associated with said image data from an administrative area of a storage part or an administrative area of said recording medium when said imaging date/time information was blank.

### EFFECTS OF THE INVENTION

The present invention can provide an image print system which provides service safely and certainly and improves user's satisfaction. Especially, when a user asks to assign a date on a print object, the present invention can provide an image print system which assigns a date certainly.

### BRIEF DESCRIPTION OF THE DRAWINGS

[FIG. 1] Diagram schematically showing a configuration of an image print system 1.
[FIG. 2] Outer perspective view of the image print device 3.
[FIG. 3] Hardware configuration diagram of the image print device 3.
[FIG. 4] Flowchart showing an operation of the image print device 3.
[FIG. 5] Diagram showing an example of a selection screen of date assignment.
[FIG. 6] Diagram showing a part of data embedded in an image data of JPEG format as standardized information.

### DESCRIPTION OF REFERENCE NUMERALS

- 1:: Image print system
- 3:: Image print device
- 5:: Recording medium
- 7:: Print object
- 11:: Monitor
- 12:: Recording medium insert opening
- 13:: Coin insert opening
- 14:: Bill insert opening
- 15:: Return lever
- 16:: Return opening
- 17:: Receipt takeout opening
- 18:: Print object takeout opening
- 19:: Speaker
- 20:: Maintenance key
- 31:: Control part
- 33:: Storage part
- 35:: Input part
- 37:: Recording medium input/output part
- 39:: Display part
- 41:: Print part
- 43:: Accounting part
- 45:: Bus

### BEST MODE FOR CARRYING OUT THE INVENTION

Hereinafter, embodiments of the present invention will be described in detail with reference to the attached drawings.

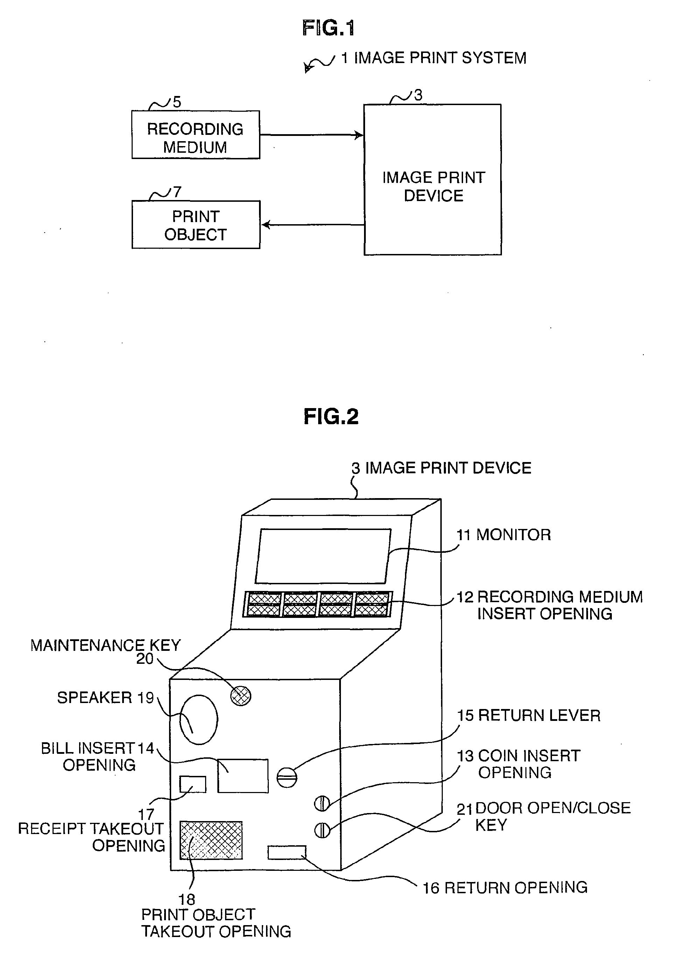

Figure 1 is a diagram schematically showing a configuration of an image print system 1 according to the embodiment of the present invention.
Figure 1 is an example of an image print system 1. As shown in Fig. 1, the image print system 1 comprises an image print device 3, a recording medium 5, a print object 7 and so on.

The image print device 3 is placed at various stores and comprises an insert opening which supports various recording media 5, and a print device which prints an image data. In addition, the print device may be placed at a point distant from the image print device 3 and be connected by network such as LAN (Local Area Network).

A user has the recording medium 5 and an image data is recorded in it. The recording medium 5 is, for example, SD(§ SD \ Secure Digital (Registered trademark) ) memory card, multimedia card (M \ MULTIMEDIACARD (Registered trademark)), memory stick (MEMORY STICK (Registered trademark)), compact flash (Registered trademark), smart media(Smart Media (Registered trademark)), xD-picture card(§ xD \ xD-Picture Card (Registered trademark)), miniSD (§ SD \ Secure Digital (Registered trademark)) card, memory stick Duo (MEMORY STICK DUO (Registered trademark)), CD (CD-ROM, CD-R, CD-RW), USB thumb drive and so on. The recording medium 5 is inserted into the insert opening of the image print device 3 and the image print device 3 reads an image data.

The print object 7 is printed by the print device equipped in the image print device 3.

Next, the outer configuration of the image print device 3 will be described with reference to Fig. 2. Figure 2 is the outer perspective view of the image print device 3.

Figure 2 is one example of the image print device 3. As shown in Fig. 2, a monitor 11 such as a touch screen monitor is installed at the front face of the upper stage part of the image print device 3. The monitor 11 displays an operation guide, an operation condition, a read image and so on and performs input through the touch screen.
Moreover, a recording medium insert opening 12 is installed below the monitor 11. LED (not shown here) corresponding to each insert opening may be installed.

A money insert opening (a coin insert opening 13 and a bill insert opening 14), a return lever 15, a return opening 16, a receipt takeout opening 17, a print object take out opening 18, a speaker 19, a maintenance key 20, a door open/close key 21 and so on are installed at the lower stage part of the image print device 3.

A user pays the fare by inserting coins into the coin insert opening 13 or inserting bills into the bill insert opening 14. When change is given, it is ejected from the return opening 16. Moreover, when the order is canceled or coins are jammed, it is ejected from the return opening 16 by turning the return lever 15. After the fare is collected, a receipt on which collected amount of fare and order contents are printed is ejected from the receipt takeout opening 17.
Moreover, a user receives the print object 7 ejected from the print object takeout opening 18 after instructing to execute printing.

The speaker 19 plays a voice, BGM, sound effect and so on while waiting or operating.
The maintenance key 20 is the key which switches a normal operation mode being able to receive a user's operation and an administrative mode where an administrator performs setting or maintenance of the image print system 1.
The door open/close key 21 is the key which opens and closes the door of the image print device 3.

Moreover, it is hardly recognized clearly from the outside, a computer including a control part which controls each component of the image print device 3, a power supply box which converts voltage, an uninterruptible power supply system which prevents a breakage of a CPU and a hard disk and so on of the control part in case of power outage and so on are installed in the chassis of the image print device 3.

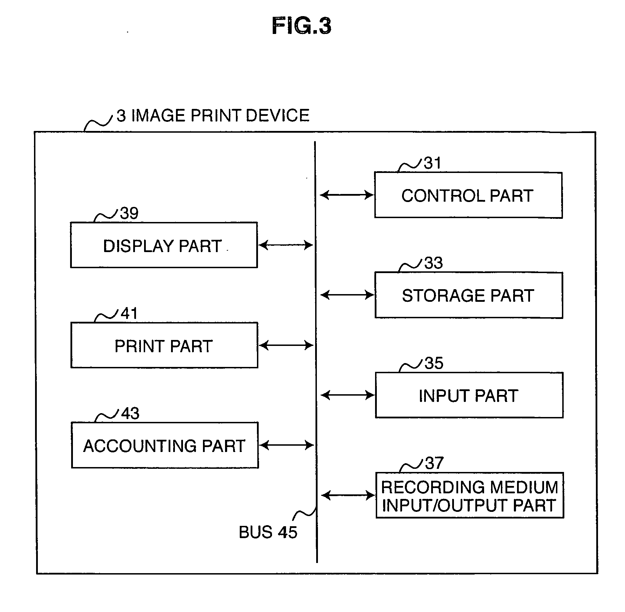

Next, the hardware configuration of the image print device 3 will be described with reference to Fig. 3.

Figure 3 is the hardware configuration diagram of the image print device 3.
The image print device 3 comprises a control part 31, a storage part 33, a input part 35, a recording medium input/output part 37, a display part 39, a print part 41, an accounting part 43 and so on that are connected through a bus 45.

The control part 31 comprises a CPU (Central Processing Unit) which executes a program, ROM (Read Only Memory) which stores a program instruction or a data, RAM (Random Access Memory) and so on. The control part 31 controls whole operation of the image print device 3.

The storage part 33 is HDD (Hard Disk Drive) and stores programs and data and so on that are required for the operation of the image print device 3. A program code is read by the control part 31 on demand, transferred to the RAM, read to the CPU and performed as various means.

The input part 35 is a touch panel and equips a touch pen and so on. Moreover, an input device such as a keyboard and a mouse may be equipped for the administrator.

The recording medium input/output part 37 is a slot or a drive comprising the insert opening corresponding to the recording medium 5. The slot or the drive is configured conforming to the specification of each recording medium 5. Moreover, each insert opening may equip LED (Light Emitting Diode) and the control part 31 may control lighting, blinking and so on of the LED.

The display part 39 is a display device such as a liquid crystal panel and has a logic circuit and so on such as a video adaptor to realize the video function of the computer cooperating with the display device.

The print part 41 is a print device such as color digital photo printer and prints the image data by instruction from the control part 31.

The accounting part 43 receives the insertion of coins and bills and prints a receipt.

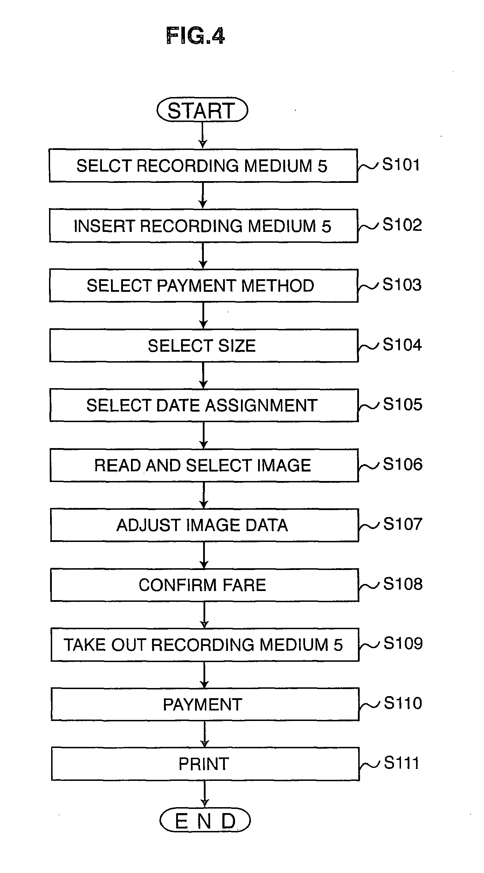

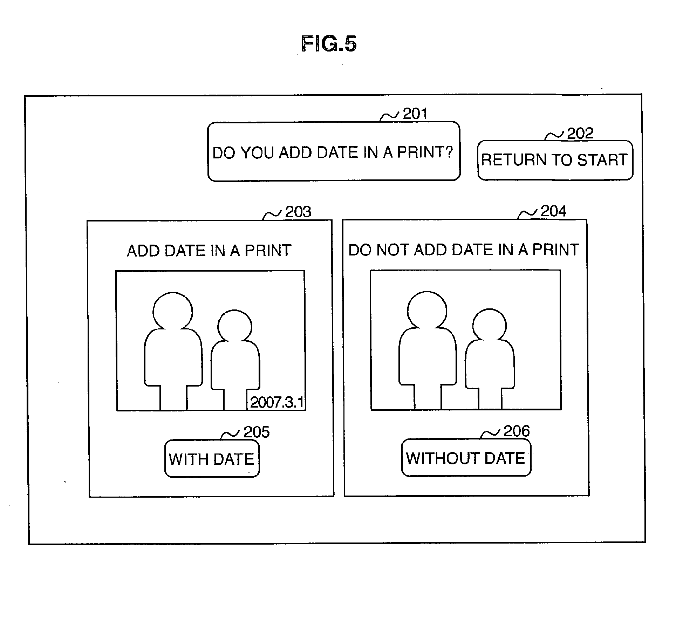

Next, the detail of the process of the image print device 3 will be described with reference to Fig. 4 and 5.

Figure 4 is a flowchart showing an operation of the image print device 3.
When a user inputs the instruction to start image print process through the input part 35, the control part 31 displays the selection screen of the recording medium 5 on the display part 39 (S101). Then, a user selects the desired recording medium 5. Here, the control part 31 may send a signal to blink the LED of the insert opening corresponding to the selected recording medium 5 and may inform a user which insert opening a user should insert the recording medium 5 into. Hereby, this makes it easy to find an insert opening for a user and prevents the breakage of the recording medium 5 by selecting an incorrect insert opening.

Next, the control part 31 displays an insert screen of the recording medium 5 on the display part 39 (S102) and prompts an insert of the recording medium 5. Then a user inserts the holding recording medium 5 into the insert opening.

Here, various storage devices than an USB thumb drive can be connected to the insert opening (hereinafter called an USB port) of the USB thumb drive which is one of the recording medium 5. For example, a large-capacity USB hard disk having a capacity of tens or hundreds of gigabits can also be connected. However, when it tries to read whole image data stored in such large-capacity storage device, it takes long time for read process and it might give a user annoyance.
Therefore, when a storage device is connected to the USB port, the control part 31 acquires the storage capacity of the connected storage device and confirms whether it is less than predetermined storage capacity.
If it is less than the predetermined storage capacity, the control part 31 proceeds to S103.
If it is predetermined storage capacity or more, the control part 31 displays message, which says that the process cannot be continued because the storage capacity is large, on the display part 39 and ends the process.
Hereby, it can avoid a situation it takes a long time for read process and it can prevent giving a user annoyance.
In addition, when it is a large-capacity USB hard disk, a computer recognizes it not as a removal disk but as a local disk usually. Therefore, when the image print device 3 recognizes it as a local disk, it may confirm if it is less than predetermined storage capacity.

Next, the control part 31 displays a selection screen of a payment method on the display part 39 (S103). Then, a user selects a payment method. For example, a payment method is a cash payment, a dedicated card payment and so on.

Next, the control part 31 displays a selection screen of a size of the print object 7 on the display part 39 (S104). Then, a user selects a size of the print object 7. For example, a size of the print object 7 is an L size (89×127 mm), a 2L size (127x180 mm), an A4 size (210x297 mm), a quarter size (254x305 mm) and so on.

Next, the control part 31 displays a selection screen of a date assignment on the display part 39 (S105). Then, a user selects "with date" or "without date". In addition, when "with date" is selected, a date is assigned to all print objects 7.

Figure 5 is a diagram showing an example of a selection screen of a date assignment.
As shown in Fig. 5, a selection screen of a date assignment comprises a message display area 201, a return button 202, a display area 203 of an image data with date assignment, a display area 204 of an image data without date assignment, "with date" button 205, "without date" button 206 and so on.
The message of "Do you add date in a print?" is displayed on the message display area 201.
The return button 202 is a button indicating a user to return to the start screen.
The display area 203 of an image data with date assignment displays an image data of a sample with date assignment.
The display area 204 of an image data without date assignment displays an image data of a sample without date assignment.
The "with date" button 205 is a button indicating to display a date on a print.
The "without date" button 206 is a button indicating not to display a date on a print.

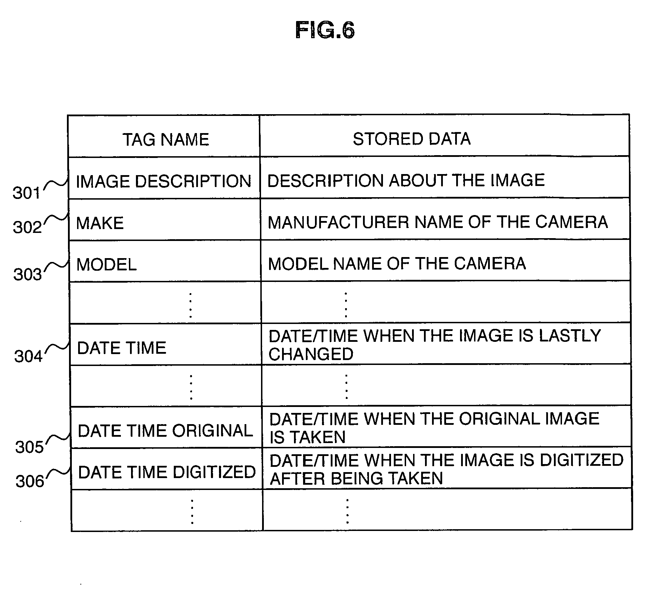

Next, a process of a date acquisition will be described with reference to Fig. 6.
Figure 6 is a diagram showing a part of data embedded in an image data of JPEG format as standardized information.
In an image data of JPEG format taken by digital camera and so on, as shown in Fig.6, a data such as imaging information is stored with each tag as standardized information.
In Image Description 301, a description about the taken image is stored.
In Make 302, a manufacture name of the imaging camera is stored.
In Model 303, a model name of the imaging camera is stored.
In Date Time 304, the date/time when the image is lastly changed is stored. Usually, it is a same value to Date Time Original 305.
In Date Time Original 305, the date/time when the original image is taken is stored.
In Date Time Digitized 306, the date/time when the image is digitized after being taken is stored.
The other imaging condition such as an exposure time, an aperture value of a lens, a distance to an object and so on is stored.

When the with date button 205 shown in Fig. 5 is selected, for example, the control part 31 acquires a data of Date Time Original 305 embedded in an image data. That is, the control part 31 acquires imaging date/time information of an image data. Then, it confirms whether the imaging date/time information is blank or not. Here, the case that the imaging date/time information is blank not only means what is called null value but also contains all data such as default value different from an original date/time. Moreover, that the imaging date/time information is blank also contains the case targeting an image data associated with image file not supporting standardized information (= an image data not storing imaging date/time information) and not being able to acquire the imaging date/time information.
When the imaging date/time information was not blank, it holds year/month/date of imaging date/time information as date information in the storage part 33.
When the imaging date/time information was blank, the control part 31 acquires file creation date/time information or file update date/time information, associated with the image data. Then, it holds year/month/date of file creation date/time information or file update date/time information as date information in the storage part 33. Here, the file creation date/time information is information of a date/time when a file associated with an image data was created in the recording medium 5 or the storage part 33. And, the file update date/time information is information of a date/time when a file associated with an image data was lastly edited.

The file creation date/time information or the file update date/time information is acquired from an administrative area of the recording medium 5 or an administrative area of the storage part 33 which copies data of the recording medium 5. Here, the administrative area is a recording area which is administered by a file system. Then, when the control part 31 accesses the administrative area of the recording medium 5 or the administrative area of the storage part 33, it uses an input/output function provided by OS (Operating System). The control part 31 acquires the file creation date/time information or the file update date/time information, that are associated with the desired image data, by the input/output function provided by OS.
When the imaging date/time information was blank, for example, the control part 31 acquires the file creation date/time information from the administrative area of the recording medium 5 and holds it as date information in the storage part 33. Moreover, for example, the control part 31 acquires the file update date/time information from the administrative area of the storage part 33 copying data of the recording medium 5 and holds it as date information in the storage part 33.

By using date information held in the storage part 33, for example, even if the imaging date/time information of the image data was blank because a clock of a camera is not set when imaging and so on, it can certainly assign date to the print object 7. Moreover, for example, even if an image data does not support standardized information, it can certainly assign date to the print object 7.

Next, the control part 31 reads an image data of the recording medium 5 through the recording medium input/output part 37 and displays a selection screen of an image on the display part 39 (S106). The display method is a method displaying a list of a number of image data as thumbnails. Then, a user selects the desired image data. Moreover, the control part 31 also displays a button specifying a number of copies to print out together. Then, a user specifies the desired number of copies.

Next, the control part 31 displays an adjustment screen of the selected image data on the display part 39 (S107). The adjustment of an image data is rotation, magnification/shrinkage, location adjustment, brightness adjustment, automatic adjustment, red-eye correction and so on of an image data. Then, a user selects various buttons on the adjustment screen and adjusts the image data. The control part 31 holds an adjusted image data in the storage part 33.
In addition, it can synthesize a frame image data to the adjusted image data.

Next, the control part 31 displays a confirm screen of the fare on the display part 39 (S108). The control part 31 calculates the fare from the specified number of copies, the size of the specified print object 7 and so on and displays the fare on the display part 39. Then, a user confirms the fare and selects an OK button.

Next, the control part 31 displays a takeout screen of the recording medium 5 on the display part 39 (S109) and prompts a receipt of the ejected recording medium 5. Here, the control part 31 may have the LED of the insert opening for takeout blink and inform a user from which insert opening the recording medium 5 is ejected. Hereby, this can prevent a user forgetting the receipt of the recording medium 5.

Next, the control part 31 displays a payment screen on the display part 39 (S110) and prompts an insertion of a cash or an insertion of a dedicated card. Then, a user inserts cash or inserts a dedicated card. The control part 31 makes settlement of the fare through the accounting part 43.

Next, the control part 31 displays a print screen on the display part 39 (S111) and informs an output location of the print object 7, a condition of an output and so on. Moreover, the control part 31 sends image data held by the storage part 33 to the print part 41 and the print part 41 prints the received image data on the print object 7. Here, when "with date" was selected in the process of a date assignment in S105, the control part 31 sends an image data which is assigned date information held by the storage part 33 for the adjusted image data to the print part 41.
In addition, either process of S110 or S111 may be performed ahead. For example, in order to avoid not printing the print object 7 however the fare is made settlement, the process of S111 is performed ahead.
Moreover, for example, in the process from S101 to S111, if a supply shortage of the print device is occurred, it is preferable to detect completion of refill of the supplies and continue the process.

As described in the above in detail, by the embodiment of the present invention, when a recording medium 5 is inserted or taken out, an LED of an insert opening is made to blink so that a user will not make an error or forget to take out the medium. Moreover, prior to an image data read process, a storage device having a storage capacity not smaller than a predetermine storage capacity, is detected and a service is terminated. This avoids a long-time read process. Furthermore, in a date acquisition process, if the imaging date/time information of the imaging data was blank, it acquires file creation date/time information or file update date/time information, which is associated with the image data, and certainly prints date on a print object 7.

Preferred embodiments of the image print system and so on according to the present invention have been described with reference to the accompanying drawings. However, the present invention is not limited to the above-described embodiments. It is clear that a person with ordinary skill in the art can easily conceive various modifications and changes within the technical idea disclosed herein, and it is contemplated that such modifications and changes naturally fall within the technical scope of the present invention.

## Claims

1. An image print system wherein an image print device prints desired image data held by recording medium, and said image print device comprising:
a portion acquiring imaging date/time information of standardized information associated with said image data; and
a portion acquiring file creation date/time information or file update date/time information associated with said image data from an administrative area of a storage part of said image print device or an administrative area of said recording medium, when said imaging date/time information was blank.

2. The image print system of Claim 1, wherein said image print device further comprising:
a portion holding year/month/date of said imaging date/time information as date information when said imaging date/time information was not blank, or holding year/month/date of said file creation date/time information or said file update date/time information as said date information when said imaging date/time information was blank; and
a portion assigning held said date information to said image data and printing.

3. An image print device printing desired image data held by a recording medium comprising:
a portion acquiring imaging date/time information of standardized information associated with said image data; and
a portion acquiring file creation date/time information or file update date/time information associated with said image data from an administrative area of a storage part or an administrative area of said recording medium when said imaging date/time information was blank.
